(19) Europäisches Patentamt / European Patent Office / Office européen des brevets

(11) **EP 2 368 126 B1**

(12) **FASCICULE DE BREVET EUROPEEN**

(45) Date de publication et mention
de la délivrance du brevet:
**24.01.2018 Bulletin 2018/04**

(21) Numéro de dépôt: **09795772.4**

(22) Date de dépôt: **18.12.2009**

(51) Int Cl.:
***G01P 5/12*** *(2006.01)*      ***G01F 1/68*** *(2006.01)*

(86) Numéro de dépôt international:
**PCT/EP2009/067573**

(87) Numéro de publication internationale:
**WO 2010/070116 (24.06.2010 Gazette 2010/25)**

(54) **SONDE ANOMETRIQUE ET SON PROCEDE DE REALISATION**

ANEMOMETERSONDE UND HERSTELLUNGSVERFAHREN

ANEMOMETER PROBE AND METHOD OF PRODUCTION

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **19.12.2008 FR 0858871**

(43) Date de publication de la demande:
**28.09.2011 Bulletin 2011/39**

(73) Titulaire: **Commissariat à l'Énergie Atomique et aux Énergies Alternatives 75015 Paris (FR)**

(72) Inventeur: **MORO, Jean-Paul F-73520 Saint Beron (FR)**

(74) Mandataire: **Ilgart, Jean-Christophe et al Brevalex 95, rue d'Amsterdam 75378 Paris Cedex 8 (FR)**

(56) Documents cités:
**US-A- 4 517 735**

• **"Chapter 11. Measurement of local flow velocity ED - Stavros Tavoularis" MEASUREMENT IN FLUID MECHANICS, CAMBRIDGE UNIVERSITY PRESS, 1 janvier 2005 (2005-01-01), pages 249-264, XP009120860 ISBN: 978-0-521-81518-5**
• **BROWNE L W B; ANTONIA R A: "EFFECT OF WIRE LENGTH ON TEMPERATURE STATISTICS IN A TURBULENT WAKE." EXPERIMENTS IN FLUIDS 1987, vol. 5, no. 6, 1987, pages 426-428, XP009120990**
• **LIGRANI P M; NAVAL POSTGRADUATE SCH MONTEREY CA USA; WESTPHAL R V; NAVAL POSTGRADUATE SCH MONTEREY CA USA; LEMOS F R; NAVAL POSTGR: "Fabrication and testing of subminiature multi-sensor hot-wire probes" JOURNAL OF PHYSICS E. SCIENTIFIC INSTRUMENTS, IOP PUBLISHING, BRISTOL, GB, vol. 22, no. 4, 1 avril 1989 (1989-04-01), pages 262-268, XP020018982 ISSN: 0022-3735**
• **DAMES C; CHEN S; HARRIS C; HUANG J; REN Z; DRESSELHAUS M; CHEN G: "A hot-wire probe for thermal measurements of nanowires and nanotubes inside a transmission electron microscope" REVIEW OF SCIENTIFIC INSTRUMENTS, AIP, MELVILLE, NY, US, vol. 78, no. 10, 11 octobre 2007 (2007-10-11), pages 104903-104903, XP012103679 ISSN: 0034-6748**
• **ERM L P: "Modifications to a Constant-Temperature Hot-Wire Anemometer System to Measure Higher-Order Turbulence Terms Using Digital Signal Processing" INTERNET CITATION, [Online] 1 septembre 1997 (1997-09-01), page 40PP, XP009120987 Extrait de l'Internet: URL:http://www.dtic.mil/cgi-bin/GetTRDoc?AD=ADA335307&Location=U2&doc=GetTRDoc.pdf> [extrait le 2009-08-03]**
• **SMITS A J; PERRY A E; HOFFMANN P H: "The response to temperature fluctuations of a constant-current hot-wire anemometer" JOURNAL OF PHYSICS E. SCIENTIFIC INSTRUMENTS, IOP PUBLISHING, BRISTOL, GB, vol. 11, no. 9, 1 septembre 1978 (1978-09-01), pages 909-914, XP009120978 ISSN: 0022-3735**

**Description**

**DOMAINE TECHNIQUE ET ART ANTERIEUR**

L'invention concerne le domaine des sondes pour réalisation de mesures anémométriques en proche paroi.

Elle concerne plus particulièrement les sondes ou dispositifs de type anémomètre à fil chaud ou à fil froid.

Elle concerne également un procédé de fabrication d'une telle sonde.

Elle concerne également un dispositif de régulation de l'alimentation et de la mesure d'une telle sonde.

Le principe de l'anémométrie à fil chaud va être d'abord brièvement rappelé : selon cette technique un fil métallique très fin, d'un diamètre généralement de l'ordre de 2 à 5 $\mu$m, est chauffé par effet Joule. S'il est placé dans un écoulement dont la température est inférieure à celle du fil, celui-ci est refroidi par convection forcée. Les fluctuations de vitesse et/ou de température du fluide de l'écoulement créent des variations de la température du fil et, par suite, des variations de sa résistance électrique. Ce sont ces dernières qui sont mises à profit dans les mesures.

La puissance électrique dégagée au niveau du fil et par suite échangée entre ce dernier et le milieu environnant peut être fournie de différentes manières par un circuit électronique, ce qui permet de définir trois types d'anémomètres :

- l'anémomètre à courant constant,
- l'anémomètre à température constante,
- l'anémomètre à tension constante.

Les mesures effectuées au voisinage d'une paroi sont très particulières, car la paroi influence la mesure de vitesse par sa présence. Cela se traduit par une surestimation de la valeur de vitesse.

Cette surestimation s'explique physiquement de la façon suivante. Parce qu'il est surchauffé, le fil est entouré d'une tache thermique de diffusion. Lorsque la distance entre le fil et la paroi devient inférieure à la taille de cette tache chaude qui englobe le fil, apparaît alors un transfert d'énergie vers la paroi. Pour le fil, cela se traduit par une augmentation de l'énergie cédée qui équivaut, par rapport à un étalonnage réalisé sans paroi, à une augmentation de la vitesse mesurée. Ce phénomène de survitesse se manifeste à partir d'une distance adimensionnelle de la paroi de l'ordre de $y^+ = 6$ ($y^+$ est défini comme le produit de la vitesse de frottement par la distance à la paroi divisé par la viscosité cinématique). Différentes corrections analytiques ont été mises au point pour corriger les mesures affectées par ce phénomène de pontage pariétal. Ces méthodes correctives ont toutes une grande faiblesse dans le sens où elles sont construites (sans exception) à partir du résultat attendu. Elles sont par conséquent inapplicables à des situations d'écoulement non établi.

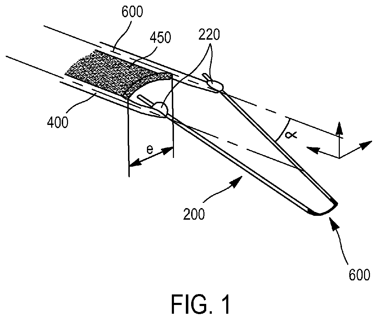

Schématiquement, une sonde connue, décrite dans le document de Ligrani et Bradshaw, 1987, et illustrée sur la figure 1, comporte un fil métallique 200 (fil chaud de diamètre 0,625 $\mu$m) en un alliage de platine à 10 % de rhodium. Ce fil métallique est traversé par un courant électrique dans sa partie active 600 (longueur chauffée) et a une forme en « U ».

Ce fil est fixé à l'extrémité de deux pointes 400, 600 maintenues entre » elles par une colle araldite 450. La fixation est obtenue par deux soudures (à l'étain) 220 du fil sur les pointes.

L'écartement e entre les extrémités des deux broches est de l'ordre de 0,5 mm.

Comme on le voit sur la figure 1, de manière à neutraliser l'effet de blocage que génère un tel rapprochement des broches, le fil définit un plan qui est incliné d'un angle $\alpha$ d'environ 15° par rapport au plan défini par les pointes 400, 600. L'effet de blocage est une perturbation sur l'écoulement, engendrée par la proximité trop importante des extrémités des broches. Cette perturbation affecte toute mesure réalisée au niveau de la partie active 600.

Un problème est donc de pouvoir réaliser une sonde qui améliore les performances d'une telle sonde. En particulier, une sonde du type de celle de la figure 1 présente des problèmes de résistance aux vibrations et de sensibilité.

Un autre aspect du type de mesures envisagées est l'effet de filtrage. Cet effet se manifeste lorsque la zone active est trop importante, fournissant une mesure moyennée ou intégrée, et non pas une mesure ponctuelle.

Or, pour limiter ce phénomène de filtrage, une solution consiste à diminuer l'écartement entre les broches afin de réduire la longueur de fil. Toutefois, on rappelle, comme déjà indiqué ci-dessus, qu'il se produit un effet de blocage que génère sur l'écoulement une proximité trop importante des broches, comme expliqué par Comte-Bellot et al, dans l'article intitulé «On aerodynamic disturbances caused by single hot-wire probes», ASME, J.Applied Mechanics,vol.38, 767-774, 1971). ). Cette solution, qui consiste à réduire la longueur active du fil sur la base du concept de sonde «Ligrani » revient à augmenter l'effet de blocage que génère alors un rapprochement trop important des broches.

On ne trouve pas non plus dans les dispositifs du commerce, telles que les sondes vendues par les sociétés Dantec ou TSI, de sonde permettant de résoudre les problèmes exposés ci-dessus.

Les sondes connues, y compris les ensembles anémométriques du commerce (typiquement sonde de 2.5$\mu$m de diamètre associée à un anémomètre à température constante), sont donc grandement insuffisantes pour la mesure des petites échelles de la turbulence, et totalement inadaptés pour les mesures en proche paroi comme celles que nous souhaitons effectuer.

Par ailleurs, pour réaliser des mesures fines de vitesse et des représentations physiques de plus en plus fines, on a besoin de sondes multifils dont le volume délimité par l'ensemble des fils est très petit.

Enfin, la réalisation d'une sonde de ce type pose de nombreux problèmes technologiques, dont la plupart ne sont pas résolus.

On ne peut pas, à l'heure actuelle, réaliser une sonde à plusieurs fils, séparés par des distances très faibles, au maximum égales à quelques fractions de mm afin de pouvoir considérer que l'ensemble des fils est dans le volume le plus petit possible et que, donc, la vitesse est la même pour tous les fils.

Un des problèmes posés par l'invention est notamment donc de trouver un procédé de réalisation qui permette d'obtenir, de manière reproductible, une sonde présentant d'excellentes performances.

## EXPOSÉ DE L'INVENTION

L'invention permet de réaliser une sonde comportant des fils de très petit diamètre, associés à un écartement entre broches important, afin, notamment, de limiter l'effet de blocage.

L'invention permet notamment de réaliser de manière reproductible des sondes à l'aide de fils de 0.35 $\mu$m à 0.625 $\mu$m de diamètre, par exemple 0.5 $\mu$m de diamètre.

L'invention concerne d'abord une sonde anémométrique à n fils (n$\geq$1), en vue d'une mesure au voisinage d'une paroi, comportant, pour chaque fil :

a) deux broches de maintien du fil, l'extrémité de chaque broche comportant une zone plane de positionnement et de fixation du fil,
b) une portion droite de fil, brasé sur lesdites zones planes de positionnement et de fixation du fil.

Les extrémités des broches peuvent être écartées d'une distance au moins égale à 4 mm.

De préférence, le fil comporte une âme centrale en un alliage de platine et de rhodium, de diamètre d compris entre 0,35 et 0,6 $\mu$m, et une gaine en argent, éliminée sur une portion de fil, dite zone sensible, de longueur comprise entre 0,4 mm et 0,5 mm.

Le fil peut être brasé sur les broches à l'aide d'une brasure de type étain-plomb.

Afin de résoudre les problèmes de cassure de la partie active du fil, celui-ci présente une courbure.

Une sonde selon l'invention, du type ci-dessus, peut comporter n fils parallèles, n$\geq$2. Par exemple elle comporte 2 ou 3 ou 4 fils parallèles entre eux.

L'invention concerne également un procédé de réalisation d'une sonde anémométrique à n fils (n$\geq$1 ou n$\geq$2), en vue d'une mesure au voisinage d'une paroi, comportant :

a) le positionnement d'une portion droite d'un fil, comportant une âme métallique entourée d'une gaine de protection, sur deux broches, l'extrémité de chaque broche comportant une zone plane de positionnement et de fixation du fil,
b) la brasure du fil sur chacune des broches,
c) l'élimination d'une partie de la gaine, de manière à mettre en évidence une zone active de mesure du fil.

L'étape b) comporte de préférence la formation d'une courbure du fil.

Selon un mode de réalisation, cette étape b) comporte :

- la réalisation d'une première brasure sur une première broche,
- l'écartement relatif des extrémités des deux broches,
- la réalisation de la deuxième première brasure sur la deuxième broche,
- le relâchement des extrémités des deux broches.

Selon un mode de réalisation, l'étape c) comporte un décapage de la gaine du fil pour former une zone active de mesure, par exemple :

- une première étape de décapage à l'acide,
- puis une deuxième étape de décapage électrochimique.

On peut réaliser une mesure de résistance du fil afin d'en déterminer la longueur décapée. En outre le décapage peut être réalisé à l'aide d'une boucle formée par un fil sur laquelle une goutte de liquide de décapage peut être maintenue.

Dans un procédé de préparation d'un fil selon l'invention une étape de recuit à une température sensiblement supérieure à la température à laquelle le fil est destiné à être utilisé peut être prévue.

Quant à la brasure, elle peut être réalisée par pistolet à air chaud, ou par impact laser.

Avant l'étape a), une étape préalable de rectification du fil peut être prévue.

Avant l'étape b), une étape de mise sous tension mécanique du fil, inférieure à quelques grammes, par exemple 6g ou 5 g ou 4g, peut être prévue.

L'invention concerne également un procédé de mesure de grandeurs anémométriques, en particulier au voisinage d'une paroi, comportant la mise en oeuvre d'une sonde selon l'invention.

Selon un autre aspect, l'invention concerne également un dispositif de régulation d'un anémomètre à fil, à courant constant, comportant :

- des moyens d'alimentation et des moyens pour réguler un courant d'alimentation du fil et d'une résistance de référence,
- des moyens pour effectuer une différence entre un signal aux bornes du fil de la sonde et un signal aux bornes de la résistance de référence,
- des moyens pour maintenir une température constante du dispositif.

Ce dispositif de régulation peut être appliqué à une sonde selon l'invention, décrite ci dessus, ou à un autre type de sonde anémométrique. Mais des résultats particulièrement intéressants sont obtenus avec une sonde selon l'invention.

Le fil et la résistance de référence sont par exemple montés en miroir de courant.

Les moyens pour réguler un courant d'alimentation comportent de préférence un transistor de réglage monté en diode et un potentiomètre.

L'invention concerne également un thermo-anémomètre à fil froid, comportant :

- un anémomètre, par exemple ayant la structure déjà décrite ci-dessus dans le cadre de l'invention,
- et un dispositif de régulation tel que ci dessus.

L'invention concerne également un procédé de mesure d'une température dans un fluide en écoulement, comportant la mise en oeuvre d'un thermo - anémomètre tel que ci dessus, sans thermocouple additionnel.

**BRÈVE DESCRIPTION DES DESSINS**

- La figure 1 est une sonde à fil chaud, de type connu,
- les figures 2A-2E représentent des aspects d'une sonde selon l'invention,
- les figures 3A-3B représentent d'autres types de sonde selon l'invention, à deux fils ou à plus de deux fils,
- les figures 4-10 représentent des étapes de réalisation d'une sonde selon l'invention,
- la figure 11 représente un circuit d'alimentation et de mesure pouvant être utilisé dans le cadre de la présente invention,
- les figures 12 et 13 sont des courbes de mesure selon l'invention pour un thermo-anémomètre selon l'invention.

**EXPOSE DETAILLE DE MODES DE REALISATION DE L'INVENTION**

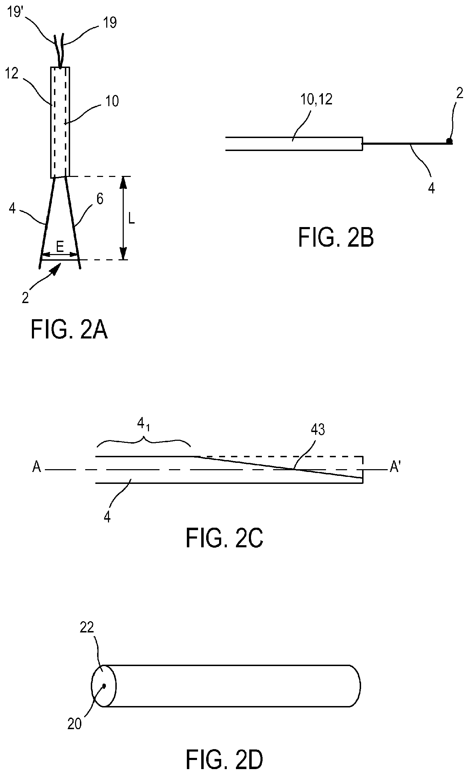

Un exemple d'une sonde selon l'invention est illustré sur les figures 2A-2E.

Selon cet exemple, la sonde comporte un fil 2 tendu entre les extrémités effilées de deux broches métalliques 4, 6, lesquelles se prolongent dans un corps isolant 10 de forme cylindrique, de préférence en une céramique.

Plus précisément, le corps 10 de sonde est constitué d'un cylindre de céramique de diamètre qui peut être par exemple compris entre 2 et 4 mm, dans lequel sont implantées en guise de broches 4, 6 des aiguilles en acier inoxydable de diamètre par exemple compris entre 0,2 mm et 0,4 mm.

Le fil 2 est positionné sur des parties des broches qui sont aplanies, comme on le voit sur la figure 2C qui représente la forme d'une broche en vue de côté, avant (traits interrompus) puis après (traits pleins) amincissement. La référence 43 désigne la partie aplanie de la broche 4 représentée, sur laquelle une extrémité du fil 2 sera brasée. L'autre broche 6 présente la même structure d'extrémité. Les structures d'extrémité sont obtenues par amincissement simultané des deux extrémités sur un marbre de rectification. Les deux zones planes ainsi définies forment un plan unique. Ce positionnement contribue à un excellent alignement du fil. Chaque broche a donc un corps $4_1$ de section sensiblement cylindrique, le cylindre étant tronqué en extrémité par un plan 43 qui coupe une direction AA' le long de laquelle la broche s'étend sensiblement. L'axe AA' est un axe de symétrie de révolution dans le cas d'une broche de forme cylindrique (figure 2C).

Le fil 2 a en outre un alignement extrêmement précis, de l'ordre du centième de mm. A la différence de la structure de sonde connue (telle qu'expliquée ci-dessus en liaison avec la figure 1), une portion droite du fil 2 est positionnée sur les broches 4, 6. Il n'y pas besoin, comme dans le cas de la figure 1, de courber le fil sous la forme d'un « U », une telle courbure nuisant à la précision et à la reproductibilité du dispositif.

La brasure du fil 2 sur les broches 4, 6 est une brasure de type alliage étain-plomb.

La longueur L émergente des broches est approximativement de l'ordre de 15 mm, et la distance D qui les sépare est sensiblement égale à, ou supérieure à, 5 mm, et de préférence comprise entre 5 mm et 8 mm, pour des écoulements de couche limite jusqu'à des vitesses de veine inférieures ou légèrement supérieures à 12 m/s. En revanche, avec des situations de fort cisaillement, en frontière de jet par exemple, un bon comportement n'est obtenu que lorsque l'écartement entre les broches n'excède pas 4 mm. Au delà de 4 mm, en raison d'une raideur insuffisante de la gaine d'argent du fil 2 (dont la structure est décrite ci dessous), l'excitation de cisaillement induit des oscillations de grande amplitude à l'échelle du fil, oscillations qui conduisent à la rupture de ce dernier.

Afin de réduire les risques de rupture de la partie active du fil lors des manipulations, le corps de sonde est gainé d'un tube 12 en élastomère, qui va absorber les ondes ou les vibrations pouvant se propager vers le fil 2, très fragile.

Le fil 2 est en fait un fil comportant une partie centrale 20 en platine ou en un alliage platine-rhodium, entourée d'une gaine 22 en argent, qui peut être de diamètre compris entre 30 $\mu$m et 80 $\mu$m, comme illustré en figure 2D.

Le diamètre de la partie centrale 20 est très faible, inférieur à 0,635 $\mu$m ou à 0,6 $\mu$m, par exemple 0,35 $\mu$m ou 0,5 $\mu$m. Le fil utilisé est de préférence un fil de type «fil de Wollaston » constitué d'un alliage platine - rhodium (Pt-10%Rh). Il est impossible de manipuler directement un fil de ce diamètre sans risque. La gaine en argent, d'un diamètre de 30 $\mu$m à 80 $\mu$m, qui entoure le fil (Figure 2D) permet cette manipulation.

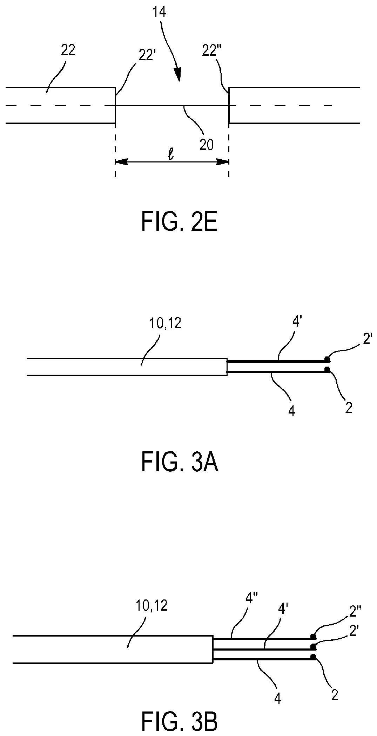

Un tel fil offre une ponctualité de mesure supérieure à celle obtenue dans les dispositifs connus, car il est possible de délimiter une zone 14 de mesure en éliminant localement la gaine du fil, comme illustré en figure 2E. Il en résulte une longueur active l comprise entre 0,4 mm et 0,5 mm. Une longueur active plus faible nuirait à la mesure, car les effets de bord, dus aux extrémités 22', 22" de la gaine aux limites de la zone 14 de mesure, seraient alors trop importants. Cet aspect est illustré sur la figure 2E, où l'on voit clairement la partie active 14 et la gaine en argent 22.

La partie active 14 n'est pas visible sur la figure 2A, car la largeur de cette partie active (entre 0,4 mm et 0,5 mm) est petite par rapport à l'écartement E entre les extrémités des broches 4, 6 (au moins 5 mm).

Le rapport l/d, de la longueur active du fil à son diamètre, est sensiblement compris entre 600 et 1500 (600 $\leq$ l/d $\leq$ 1500). Au-delà, le caractère ponctuel de la mesure disparaît : on retrouve alors les effets de filtrage ou de mesure moyennée déjà mentionnés. Avec un rapport compris entre 600 et 1500, l'hypothèse de la bidimensionnalité, donc d'un profil de température très plat dans la zone active, est satisfaite. Pour un rapport inférieur à 600, l'apparition des effets de bout font que le profil de température le long du fil ne peut plus être assimilé à un profil « porte » (c'est-à-dire une température constante long du fil), ce profil se rapproche alors plutôt d'un profil de type parabolique. Concrètement, cette situation se traduit par une perte de sensibilité du fil et une détérioration du rapport signal sur bruit. Physiquement, cela veut dire que l'on ne peut pas capter les phénomènes de faible amplitude.

Le fil 2 est lié aux broches 4, 6 par brasure de la gaine 22 en argent sur ces broches.

Une sonde selon l'invention présente des propriétés de localisation de la mesure, sans effet de filtrage (du fait de la ponctualité sur la mesure atteinte par la très petite largeur de la zone de mesure 14), sans effet de blocage (du fait de l'éloignement des extrémités des broches entre elles). Cette sonde résiste en outre aux vibrations. Une sonde selon l'invention permet donc de mesurer des grandeurs physiques au plus proche d'une paroi, sans biais, et donc sans qu'une correction soit nécessaire. Pour une gamme de vitesse inférieure à 10m/s on peut s'approcher jusqu'à y$^+$ $\approx$ 2 sans correction de paroi. y$^+$ est défini comme le produit de la vitesse de frottement par la distance à la paroi divisé par la viscosité cinématique.

L'invention ne concerne pas seulement une sonde mono fil mais également une sonde multi fils.

Une sonde double, par exemple qui associe un fil chaud 2 et un fil froid 2' parallèles, avec un espacement entre les deux fils de l'ordre de 0.3 mm, est également objet de la présente invention et est représentée, en vue de côté, en figure 3A (on ne voit les fils que par le côté, donc chaque fil 2, 2' est assimilé à un point sur cette figure ainsi que sur la figure 3B). Les autres références sont celles des figures 2A-2E et désignent les mêmes éléments. Dans ce mode de réalisation, deux paires de broches sont prévues, la paire 4, 6 déjà décrite ci-dessus, sur laquelle est brasé le fil 2, et une autre paire 4', 6' (dont seule la broche 4' est visible sur la figure 3A) sur laquelle est brasé le fil 2'.

Une sonde triple, qui associe trois fils 2, 2', 2" parallèles, est représentée, en vue de côté, en figure 3B. Là encore, les références sont celles des figures 2A-2E et désignent les mêmes éléments. Dans ce mode de réalisation, trois paires de broches sont prévues, la paire 4, 6 déjà décrite ci-dessus, sur laquelle est brasé le fil 2, et une autre paire 4', 6' (dont seule la broche 4' est visible sur la figure 3B) sur laquelle est brasé le fil 2', une troisième paire 4", 6" (dont seule la broche 4" est visible sur la figure 3B) sur laquelle est brasé le fil 2". Une telle sonde triple fonctionne de préférence avec un fil chaud, au centre (le fil 2') et deux fils froids, de part et d'autre (les fils 2 et 2"), qui donnent une information sur le sens de l'écoulement.

Dans une sonde double, ou, plus généralement, à n fils, au moins l'un des fils, ou chacun des fils, possède les caractéristiques indiquées ci-dessus, et est fixé de la manière indiquée ci-dessus, sur une paire de broches présentant des parties d'extrémité aplanies, qui peuvent avoir été préparées comme déjà expliqué.

Quel que soit le nombre de fils, les fils sont séparés d'une distance $\delta$ (distance maximale entre deux fils) inférieure ou égale à 0,8 mm, ou comprise entre 0,2 mm et 1 mm ou entre 0,3 mm et 0,8 mm. Plus généralement, cet écart maximum entre les plans dans lesquels sont situés les fils, ou cet écart maximum entre les fils contribue à la possibilité de réaliser des mesures ponctuelles, permettant d'avoir une représentation extrêmement fine des phénomènes observés.

Un procédé de fabrication d'une sonde selon l'invention va maintenant être décrit. Il concerne la réalisation d'une sonde à un seul fil, et peut être appliqué à la réalisation d'une sonde à un nombre quelconque de fils parallèles, sauf spécification contraire.

L'ensemble des opérations s'effectue de préférence sous loupe binoculaire, étant donné la taille des éléments et la précision requise. Cette loupe, ou tout autre moyen de visualisation choisi ou équivalent, permet de visualiser avec une précision au 1/100$^{\text{ème}}$ de mm.

D'abord, on solidarise les broches 4, 6 avec le corps 10, 12 de sonde. Dans ce dernier, des perçages ont été effectués ou des gorges ont été creusées afin, justement, de positionner ces broches. Eventuellement, on insère les broches dans le corps de sonde à l'aide d'un gabarit afin que celles-ci dépassent du corps de sonde d'une longueur égale.

La connexion soudée entre les câbles électriques d'alimentation 19, 19' (figure 2A) (c'est par ces moyens de connexion qu'arrive le courant qui doit passer dans le fil 2) et les broches 4, 6 peut être située dans la gorge ou les perçages du corps 10 ou à l'extérieur. La soudure de cette connexion est réalisée lors de cette étape de préparation.

Le scellement des broches dans le support peut être assuré par enduction d'un béton dont la prise est compatible avec la céramique. Des tests montrent qu'une colle, par exemple de type Araldite peut également très bien assurer cette fonction de scellement, tout en conservant une certaine élasticité qui s'avère intéressante pour l'absorption des vibrations et la sauvegarde de la sonde.

Le corps 10 de sonde, une fois muni de ses broches 4, 6, est inséré dans un fourreau 12 amortisseur en élastomère, afin de limiter les vibrations pouvant casser la partie active du fil, qui est très fine.

En prévision de l'opération de brasure du fil 2, on prépare également l'extrémité des broches 4, 6 pour garantir l'obtention d'une bonne surface de contact. Pour ce faire, on réalise une légère abrasion du bout des broches à l'aide de papier de verre fin, qui peut être disposé sur un marbre de rectification, afin de créer un plat 43 en leur extrémité, comme illustré en figure 2C pour la broche 4. On dispose ainsi, au final, d'un contact cylindre (le fil) sur plan (le bout aplati 43 de la broche) permettant un positionnement précis du fil et une expansion contrôlée de la brasure sur cette surface au moment de la fusion. Sans cette surface plane 43 en extrémité de chacune des broches, le contact entre le cylindre que constitue le fil et le cône (l'extrémité pointue de chaque aiguille 4, 6) rendrait la mise en place du fil 2 délicate, peu précise, et engendrerait en outre un risque de coulure de la brasure sous la broche.

Après cette abrasion, la sonde est mise en place sur le support de fabrication.

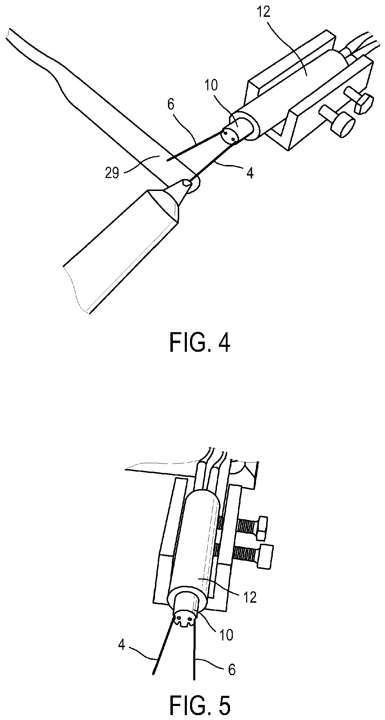

Pour pouvoir braser le fil, on nettoie les broches 4, 6 pour garantir une mouillabilité optimale. Afin d'enlever les différents oxydes et créer un support de prise à la brasure, on étame l'extrémité des broches à l'aide d'une pâte à braser 29 (référence : Castolin 157A) déposée sur une feuille d'acier inox à l'aide d'un fer à souder 3, comme illustré en figure 4. Les broches sont ensuite nettoyées à l'acétone.

La figure 5 représente le corps 10, 12 de sonde, avec ses broches 4, 6 prêtes à accueillir le fil 2 de la sonde. Le corps de la sonde est monté sur un ensemble de tables micrométriques, non visible sur la figure, qui vont permettre de réaliser des déplacements extrêmement précis, suivant deux ou trois dimensions, au centième de millimètre près.

Le fil utilisé, muni d'une gaine 22, se présente en général sous forme de bobines de quelques centimètres de diamètre. Ce type de conditionnement enroulé engendre une mise en forme du fil, d'autant plus importante et persistante que le fil est de petit diamètre. Il est donc préférable de rouler le fil manuellement sur un support plat afin de minimiser la courbure qui résulte de l'effet de mémoire du métal qui est resté bobiné.

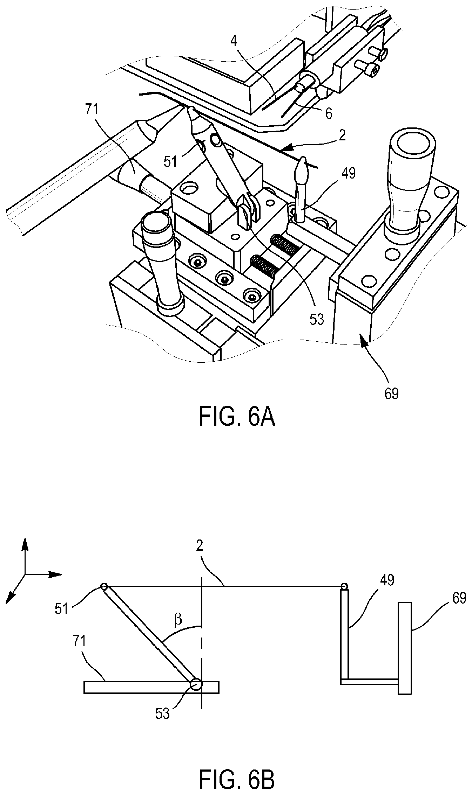

Comme on le voit sur les figures 6A et 6B, un support, qui va permettre de braser le fil sur les broches 4, 6, comporte un bras vertical fixe 49, et un second bras 51, sensiblement de même taille et monté sur une liaison pivot 53 qui lui permet de s'incliner dans un plan vertical perpendiculaire à l'axe du pivot. Ce support est muni de deux tables micrométriques 69, 71 permettant de contrôler le positionnement de chacun des bras, et donc l'alignement du fil 2 ainsi que sa tension. Chaque table va permettre de réaliser des déplacements extrêmement précis, suivant une, deux ou trois dimensions, au centième de millimètre près.

On étame au préalable l'extrémité des bras 49, 51 afin de pouvoir braser le fil 2. On écarte ensuite les deux bras 49, 51 du support d'une vingtaine de millimètres. On brase à l'aide de brasure étain classique le fil sur les deux bras en veillant à bien laisser vertical le bras mobile.

Afin de maîtriser la tension sur le fil 2, on positionne le bras mobile 51 de façon à ce qu'il fasse un angle $\beta$ de 45° avec la normale. Le poids de ce bras 51 est ajusté de manière à ce que, dans cette position, la tension sur le fil soit d'environ 4 g. Cette valeur a été choisie après de nombreux essais destinés à obtenir un fil 2, juste tendu de manière reproductible. On baisse ensuite le bras 49 avec la table micrométrique verticale 69 de manière à ce que les deux bras soient au même niveau et que le fil se trouve le plus possible à l'horizontale.

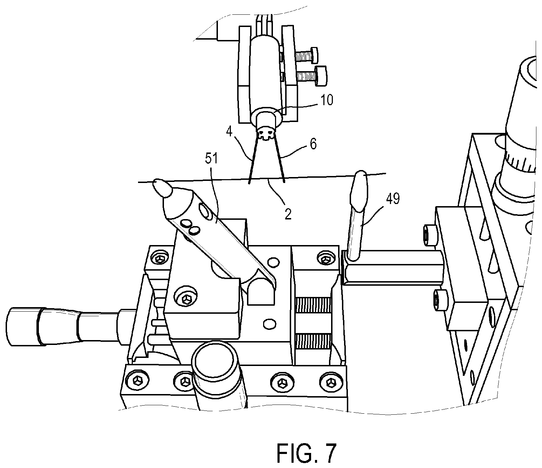

Après avoir approché manuellement ce support, sur lequel le fil est préparé, on amène celui-ci au contact des broches 4, 6, comme illustré en figure 7, à l'aide des tables micrométriques.

Une fois cette opération effectuée, on dégraisse le fil 2 et une première broche (par exemple la broche 4) avec de l'acétone. On dépose alors à la jonction entre le fil 2 et cette première broche un tout petit point de brasure à l'aide de l'extrémité d'une aiguille. Cette brasure, dont on verra plus loin qu'elle est à base de plomb, est constituée de microbilles de 15 $\mu$m de diamètre, en différents éléments (Sn : 62% ; Pb : 36% ; Ag 2%) combinés pour obtenir un point de fusion bas.

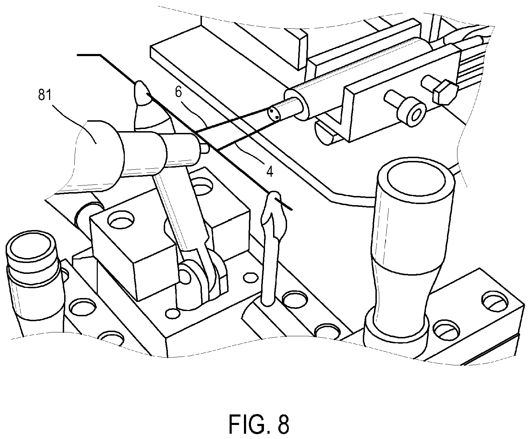

On fait ensuite fondre la brasure, par exemple à l'aide d'un fer à air chaud 81 (Figure 8). A ce stade, le fil 2 est rendu solidaire de la broche 4, et il s'agit ensuite de le braser sur sa seconde broche 6.

Or un fil tendu entre 2 broches 4, 6 est très sensible aux moindres vibrations et peut casser très facilement, et ceci est d'autant plus vrai que le diamètre du fil 2 que l'on utilise est petit. De multiples tentatives ont montré que, même avec les plus grandes précautions de montage, la détérioration d'une sonde à fil tendu peut se produire.

Afin d'augmenter la résistance mécanique des sondes on applique donc un léger galbe ou une courbure au fil 2 à ce moment de la fabrication.

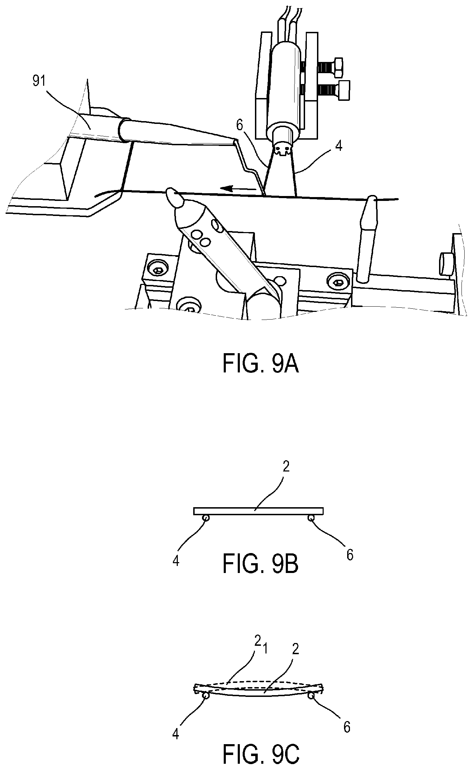

Pour ce faire, on approche une tige métallique 91, courbée en son extrémité vers la broche 6 avec laquelle le fil 2 n'est pas encore solidaire (figure 9A). Après l'avoir amenée au contact de la broche 6, on écarte l'extrémité de cette broche, dans une direction sensiblement parallèle au fil 2, d'une certaine distance, par exemple environ 20 $\mu$m, à l'aide d'une table micrométrique sur laquelle la tige 91 est montée. On peut ensuite procéder à la brasure du fil 2 de la même manière que pour la première broche.

Lorsque la brasure est effectuée, la tige 91 est retirée, et la broche 6 revient à sa position initiale par rapport à l'autre broche 4. Le fil 2 adopte alors une légère courbure, ou une flèche, de l'ordre de quelques centièmes de mm, par exemple inférieure à 2/100$^{\text{ème}}$ de mm ou à 4/100$^{\text{ème}}$ de mm, dans un plan sensiblement perpendiculaire à l'axe du corps 10 de la sonde. Cette courbure n'aura pas d'influence sur les mesures anémométriques effectuées par la suite et confère au fil une souplesse lui permettant d'absorber des contraintes mécaniques ou des vibrations. La courbure obtenue n'a pas d'influence sur la condition d'alignement déjà présentée ci-dessus, car elle est très faible.

La figure 9B représente les deux extrémités des deux broches 4, 6 en position écartées l'une de l'autre à l'aide de l'outil 91 (non représenté sur cette figure). Le fil repose alors sur les deux broches, il est déjà brasé sur la broche 6 mais pas encore brasé sur la broche 4.

La figure 9C représente les deux extrémités des deux broches 4, 6 et le fil 2 après réalisation de la deuxième brasure et retrait de l'outil 91. Les deux extrémités des deux broches 4, 6 ont repris leurs positions d'équilibre. Le fil est brasé, mais a subi une légère courbure, qui est représentée de manière exagérée sur la figure 9C. Deux positions 2, $2_1$ du fil sont représentées sur cette figure, respectivement avec la courbure tournée vers le bas et vers le haut de la figure.

Le fil 2 est ensuite coupé à l'aide d'une lame de rasoir au ras des broches, afin de pouvoir retirer l'ensemble porte-fil et de débraser les extrémités de fil restantes sur ce dernier. Cette opération de débrasage fil-bras est effectuée après la découpe du fil. En effet, ce dernier est très conducteur de la chaleur, et, si l'on pointe le fer sur l'un des bras 49, 51 du support du fil, la conduction peut ramollir la brasure broche 4, 6 - fil 2 située à quelques millimètres, absorber la tension et le galbe ou la courbure, donné au fil comme expliqué ci dessus, et donc sérieusement compromettre le succès de la réalisation de la sonde.

Le fil étant ainsi monté entre les broches, on peut mettre à nu la partie active qui va servir à la mesure.

On peut à cette fin procéder par décapage de la partie active 14 (figure 2E) du fil. Ce décapage s'effectue par une dissolution ponctuelle de la gaine 20 d'argent, par attaque chimique ou électrochimique.

Cette gaine est attaquée avec de l'acide nitrique. Pour cela, on peut utiliser deux techniques : celle du jet et celle de la goutte. Dans le premier cas, un jet millimétrique d'acide est projeté sur le fil tandis que, dans le deuxième cas, on forme une goutte d'acide que l'on approche lentement au contact du fil. Le premier procédé a été abandonné car il est traumatisant pour le fil et, lorsque ce dernier est d'un diamètre faible, le contact avec une goutte statique est mieux adapté à sa faible tenue mécanique.

La longueur $l$ à décaper se détermine en fonction du diamètre d du fil sachant que, si l'on veut assurer un profil de température le plus uniforme possible sur le fil lors de son utilisation en fil chaud, un rapport $l/d$ supérieur à 250 permet de limiter l'impact sur la mesure de la conduction aux extrémités de la partie active (pour un matériau donné et donc une longueur froide donnée). En mesurant la résistance du fil, on a une indication de la longueur décapée par la relation suivante :

$$R = \frac{\rho l}{S}$$

où $\rho$ est la résistivité électrique du matériau, en l'occurrence le platine-rhodium ($\rho$ = 1,9.10$^{-7}$ $\Omega$.m). On mesure donc cette résistance au cours du décapage.

Avec des fils de 0,35 μm et 0,5 μm, pour une longueur l décapée comprise entre 0,4 mm et 0,5 mm, on a sensiblement :

Pour un diamètre de 0, 35 μm : 1150< l/d < 1400.
Pour un diamètre de 0, 5 μm : 800< l/d < 1000.

Conformément à l'invention, et comme déjà expliqué ci-dessus, une sonde avec un rapport l/d supérieur à 1500 ne présente pas le caractère ponctuel requis pour la mesure: on retrouve alors les effets de filtrage ou de mesure moyennée déjà mentionnés.

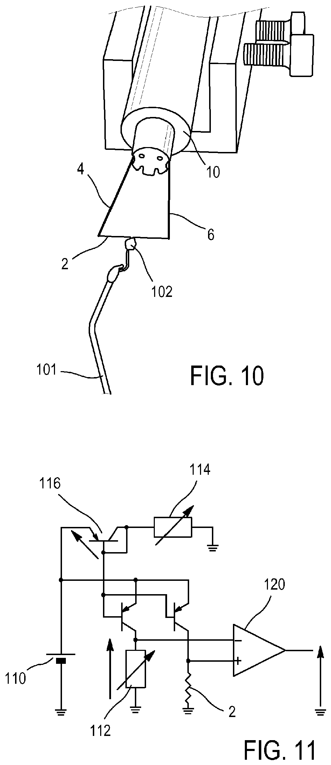

Le système utilisé ici est composé d'un fil 101 (figure 10) de quelques centièmes de millimètre en acier inox. L'extrémité de ce fil forme une boucle qui permet le maintien de la goutte 102. Cette dernière, constituée d'acide nitrique pur, est déposée sur la boucle à l'aide d'une seringue. On approche ensuite la boucle et la goutte à l'aide de micromanipulateurs pour amener cette dernière au contact du fil 2 à décaper.

A l'aide de tables de micro déplacements, on effectue un mouvement de va et vient pour dissoudre l'argent de la gaine 22. Une fois la goutte saturée en argent, on la retire du fil et on la remplace par une autre goutte d'acide nitrique. On procède de la même manière jusqu'à ce que le fil de platine-rhodium 20 apparaisse et que la résistance de ce fil commence à évoluer. On ajuste la longueur décapée en fonction de la résistance de la sonde. Typiquement, on a une résistance de 500 Ω pour du fil de 0,5 μm de diamètre et de 1 kΩ pour du fil de 0.35 μm, ce qui correspond à une longueur décapée de 5 à 6 dixièmes de millimètre, correspondant à un rapport *l/d* de l'ordre de 1100 et 1600 respectivement.

Une fois le décapage à l'acide pur effectué, on effectue un second décapage, électrochimique cette fois, visant à débarrasser le fil mis à nu de toute trace d'argent résiduelle. En effet, s'il reste de l'argent sur le fil, celui-ci va migrer au joint de grain du platine-rhodium et faire évoluer la valeur de sa résistance. Il sera alors impossible de se recaler sur l'étalonnage d'origine et d'effectuer des mesures correctes.

On relie donc un circuit électrique simple constitué d'une batterie, d'un potentiomètre et d'un interrupteur d'une part à la boucle métallique qui porte la goutte et d'autre part aux deux fils de connexion 19, 19' (figure 2A) liés aux deux broches 4, 6 (pour éviter toute dissymétrie de comportement de la goutte). On forme ensuite, comme précédemment, une goutte 102 pour le décapage, mais cette fois-ci constituée d'acide nitrique dilué à 5%. On l'approche de la même manière que les gouttes précédentes, de manière à ce que le fil soit mouillé à l'intérieur de la goutte. L'interrupteur est ensuite actionné, brièvement car le dégazage est très rapide et violent à l'échelle du fil. Après cette opération le fil est rincé à l'aide d'une goutte d'eau déminéralisée de manière à éliminer toute trace résiduelle d'acide sur le fil.

Dans la méthode précédente on forme une goutte dont la taille dépend de la taille de la boucle et les forces de tension de surface.

On peut ensuite réaliser un recuit de la sonde : on fait traverser le fil 2 par un courant calculé en fonction de la résistance de la sonde. On porte ainsi le fil à une température sensiblement supérieure à la température à laquelle il est destiné à travailler. La différence de température entre le fil et l'air ambiant est donnée par la relation suivante :

$$\Delta T = \frac{R_{fil} - R_o}{aR_0}$$

où $R_0$ est la résistance de la sonde à la température ambiante, *a* le coefficient d'évolution de la résistance avec la température (1,6.10⁻³ K⁻¹ pour le Pt-10%Rh) et où $R_{fil}$ est la résistance du fil porté à la température $T+\Delta T$, donnée par la loi d'Ohm.

Cette opération permet de faire diffuser les dernières traces éventuelles d'argent dans la structure cristalline du fil de platine-rhodium. Si le décapage a été correctement effectué, l'argent résiduel étant présent en très faible quantité, le fil se stabilise au bout d'une journée et ne voit plus sa résistance évoluer.

La partie active 14 d'un capteur selon l'invention est principalement constituée du fil 2, de très faible diamètre, de l'ordre de quelques dixièmes de μm (figure 2E). Ce fil présente pas, ou peu, de résistance mécanique.

On cherche donc à réaliser une condition d'alignement très forte entre les deux tronçons de gaine 22 qui se situent aux extrémités du fil 2 (figure 2E), un défaut d'alignement pouvant engendrer un risque de rupture du fil décapé. Un défaut d'alignement est inférieur à la courbure ou au galbe donné au fil. Pour un galbe ou une courbure de 2/100 ème de mm à 3/100 ème de mm, le défaut d'alignement doit être de l'ordre du centième de mm, de façon à ce que le galbe garde une fonction d'amortissement.

Un tel alignement est obtenu de la manière suivante.

D'abord on veille à la rectitude du fil utilisé. Ce fil est en général conditionné sous forme enroulée autour d'une bobine de plusieurs cm de diamètre. Il s'avère qu'une tension de quelques grammes, par exemple d'environ 4 g, sur le fil déroulé est suffisante pour qu'il perde la mémoire de son enroulement. Cette valeur autorise la réalisation de sondes employant un fil 2 dont la partie active 14 a un diamètre de 0,625 $\mu$m. Par contre, pour les diamètres inférieurs (0,5 et 0,35 $\mu$m), cette tension s'avère insuffisante pour obtenir des conditions d'alignement qui font qu'il n'y ait pas rupture du fil après décapage. Un fil de diamètre 0,625 $\mu$m possède une résistance mécanique qui autorise un certain désalignement que ne supportent pas les fils de 0,5 et 0,35 $\mu$m. Par conséquent, pour la réalisation des sondes selon l'invention, la tension a, dans un premier temps, été augmentée pour la porter jusqu'à une valeur de 7 g. Cette solution n'a pas donné de résultats satisfaisants dans la mesure où l'excès de tension sur le fil 2 masque l'existence, lors de sa mise en place, d'un éventuel défaut d'alignement entre les broches 4, 6 et le fil 2 lui-même. Ce défaut peut se traduire, lors du décapage, par la rupture de la partie active 14, décelable seulement après coup. Pour contrer le phénomène de masquage de cet éventuel défaut d'alignement, il a fallu revenir à une tension inférieure à 7g, environ 4 g dans le cas considéré. Pour compenser le manque de tension, on effectue au préalable une opération de redressement du fil, par exemple en le faisant rouler entre une plaque de verre et un bloc de métal, dont l'état de surface est poli (cale étalon). Cette solution apporte de bons résultats.

On cherche également à obtenir un très bon parallélisme le plan 43 contenant les deux génératrices de contact du fil 2 sur les cônes des broches 4, 6 et le fil en lui-même. Si ce parallélisme n'est pas respecté, le désalignement qui en résulte génère, après le brasage du fil sur les broches, une contrainte mécanique qui, en retour, détruit la partie active du fil après décapage.

L'expérience montre que le défaut d'alignement toléré est de l'ordre du centième de millimètre pour une distance entre broches de 8 mm. Pour que cette condition soit bien vérifiée, la tension mécanique sur le fil testée est de préférence inférieure à quelques grammes, aux environs de 4 g.

En ce qui concerne la nature de la brasure, des essais ont été réalisés avec des brasures étain-cuivre, qui conviennent pour des fils de diamètre supérieur à 0,625 $\mu$m.

En revanche, il s'avère que, pour des diamètres inférieurs à 0,625 $\mu$m, la fabrication d'un capteur devient aléatoire. Après une analyse fine des conditions de réalisation et le recoupement des problèmes, il est apparu que la tenue mécanique de l'alliage étain-cuivre n'est pas suffisante, en particulier pour empêcher, lors de la découpe du fil, une rotation de ce dernier au niveau des broches, là où il doit normalement être considéré, du point de vue mécanique, comme encastré. Par voie de conséquence, ce déplacement relatif du fil sur les broches engendre un défaut d'alignement des deux parties gainées du fil. Ce désalignement peut conduire à la rupture du fil, après décapage.

Pour contourner l'effet de fluage que provoque l'effort qu'engendre une découpe avec une lame de rasoir au niveau des broches, on peut mettre en oeuvre d'autres moyens de découpe, par exemple un disque tournant à grande vitesse de rotation, de manière à rendre quasi-nul l'effort de cisaillement au niveau de la brasure. Ce procédé de découpe est tout à fait satisfaisant pour des sondes mono fil, mais devient inopérant pour des sondes multi fils. En effet, la phase de découpe à l'aide du disque met en évidence l'existence d'un liquide (que nous supposons être de lubrification, pour que, lors de la phase de fabrication, l'écrouissage entre la gaine 22 d'argent et l'âme 20 en platine-rhodium puisse se dérouler normalement). Ce dernier, en venant polluer les broches environnantes, rend leur brasage impossible.

L'utilisation d'une brasure à base d'alliage étain-plomb a permis de résoudre ce problème. Une telle brasure a une bien meilleure tenue mécanique et permet une découpe manuelle du fil par lame de rasoir, bien plus aisée à mettre en oeuvre, en particulier dans le cas de la sonde multifil.

Avec cette nouvelle brasure, la partie du fil située entre les broches ne souffre plus d'aucune contrainte liée à cette opération.

Au regard de la dimension caractéristique des éléments (diamètre du fil de l'ordre de 50 $\mu$m, extrémité des broches de l'ordre de 20 $\mu$m), la brasure est de préférence réalisée avec un pistolet 81 à air chaud (figure 8), qui autorise le brasage à distance sans contact, grâce notamment à un jet d'air qui transporte l'énergie nécessaire à la fusion de la pâte à braser. Néanmoins des difficultés surgissent, liées au fait que le jet ne peut être de taille ponctuelle.

Chronologiquement, l'activité de fabrication de sondes équipées de fils de très petits diamètres a débuté avec du fil de 0,625 $\mu$m. Pour les premières sondes, nous avons repris stricto sensu la méthode de fabrication que nous avions développée pour des sondes équipées de fil de 2,5 $\mu$m. De façon systématique, lors de la phase de décapage, il y avait rupture du fil de 0,625 $\mu$m. Un travail d'analyse a permis de mettre en évidence deux causes responsables de la rupture du fil, lorsque celle-ci se produit.

La première concerne l'existence d'une tension mécanique résiduelle dans le fil de Wollaston, due au fait que le fil était installé sans tension préalable, ce qui n'annulait pas suffisamment la mémoire résiduelle de son enroulement sur la bobine de conditionnement. Comme déjà expliqué ci-dessus, une étape de rectification et une tension mécanique sur le fil de quelques grammes, (aux environs de 4 g) permettent de résoudre ce problème.

La seconde cause est liée à un phénomène de dilatation thermique, qui n'a pu être mis en évidence de façon systématique que lorsque le fil fut préparé avec une tension mécanique. Lors du décapage, la partie active 14 du fil était toujours plus ou moins alignée avec les deux tronçons de gaines 22, mais au niveau de la rupture apparaissait un écart entre les deux parties du fil rompu. Cet écart était la signature de l'existence d'un phénomène de dilatation thermique.

Qualitativement, ce processus de tension thermomécanique dans le fil n'existe que parce que la constante de solidification de la brasure est plus faible que la constante de refroidissement du fil. A ceci s'ajoute la forte valeur de diffusivité de l'argent, qui fait que la longueur chauffée peut atteindre quelques millimètres durant le temps de liquéfaction de la brasure. En s'appuyant sur une modélisation simplifiée de la longueur chauffée sur le fil, de la différence de température subie par le fil et de la durée d'exposition à la source chaude, l'estimation du raccourcissement du fil après solidification de la brasure est de l'ordre de 10 $\mu$m. Pour neutraliser ce phénomène de tension thermomécanique, qui signifie à coup sûr la rupture de la partie active 14 du fil, on a, dans un premier temps, diminué la taille de la buse du fer 81 à air chaud, en pensant que cette solution allait contribuer à une diminution de l'échauffement du fil. Malheureusement cette option n'a pas donné de résultats satisfaisants ; en revanche, elle a fait apparaître un problème d'entraînement de la brasure sous la broche, lié à l'augmentation de la vitesse de l'air chaud en sortie de buse. On ne peut donc pas diminuer indéfiniment le diamètre de la buse, d'autant que pour une valeur trop faible de ce dernier, l'énergie cédée à la brasure n'est de surcroît plus suffisante pour assurer sa fusion.

Une solution, qui prend en compte cet effet inéluctable de thermo-dilatation du fil, consiste à flamber légèrement une des broches 4, 6 avant le brasage, et à la relâcher ensuite, de manière à retrouver pour le fil une situation sans contrainte résiduelle.

Cependant, la fabrication de sondes doubles à fils parallèles s'avère difficile à réaliser avec cette technique de brasage. La distance entre les deux fils n'est jamais suffisante pour qu'il n'y ait pas interaction du jet du fer 81 à air chaud, avec un premier fil déjà brasé, lors du brasage d'un second fil. Une réponse à ce problème consiste à implanter, dans l'espace entre les deux paires de broches, un écran thermique destiné à protéger le premier fil.

Une autre technique met en oeuvre un apport très localisé de puissance par rayon laser, dont la ponctualité présente l'avantage de ne pas polluer thermiquement l'environnement. Le laser employé est de mode impulsionnel, de type Yag avec une puissance maximale de 30W. La fréquence et la durée des impulsions sont réglables. On focalise le faisceau sur le point de brasure en bout de broche grâce à une caméra couplée au laser, et on effectue un tir qui entraîne la fusion de la brasure et couple le fil à la broche.

La mise en oeuvre de cette technique permet d'assurer l'opération de brasure quels que soient le degré de miniaturisation de la sonde et le nombre de fils qu'elle comporte.

L'expérience montre que la manipulation de sondes devient très délicate dès lors que le diamètre des fils devient inférieur à 0,625 $\mu$m. En particulier lors du montage d'une sonde selon l'invention dans une soufflerie, des vibrations sont créées, qui constituent un élément critique pour la tenue du capteur car elles sont suffisantes pour créer une onde qui se propage dans les broches jusqu'au fil. A cause de sa faible résistance mécanique, la présence de la courbure de la partie active n'est plus suffisante pour amortir ces vibrations pouvant conduire à la rupture du fil. Il a été constaté que c'est par le corps de la sonde qu'est transmis l'essentiel des vibrations vers l'extrémité des broches, par exemple lors de son blocage sur son support à l'aide d'une vis.

La solution optimale pour protéger le fil a consisté à insérer le corps de sonde en céramique, une fois muni de ses broches, dans un fourreau amortisseur 12 de très faible dureté (de l'ordre de 25 shores A).

Une sonde selon l'invention est utilisée avec des moyens d'alimentation en courant, et des moyens de mesure des variations de résistance électrique du fil, ou des fils. Ce sont ces variations qui traduisent les variations de vitesse et/ou de température d'un fluide que transporte un écoulement dans lequel la sonde est plongée.

D'une manière générale, pour la réalisation d'une mesure à la fois précise et reproductible, il est préférable d'utiliser une alimentation par des batteries. Ainsi on découple le système du réseau électrique, dont les potentiels peuvent fluctuer (du fait, par exemple, de la mise en marche ou de l'arrêt d'installations voisines). En outre les courants et/ou les tensions qui interviennent au niveau du capteur sont très faibles et peuvent être aisément perturbés par ces fluctuations du réseau, si petites soient elles.

Par ailleurs, dans des installations telles qu'une soufflerie, il est difficile de mettre correctement au même potentiel les différents points de masse. Il en résulte des courants de boucle entre ces différents points de masse, pilotés par les fluctuations de potentiel du réseau, courants qui perturbent également les mesures de manière importante.

Cette solution permet en outre d'alimenter tous les circuits, qui possèdent ainsi un potentiel de masse fixe et non plus fluctuant comme ce peut être le cas lorsqu'ils sont reliés à des régulateurs de tension électroniques.

Pour assurer la compatibilité électromagnétique (CEM) les circuits sont de préférence placés dans une boîte, par exemple en cuivre, qui constitue un plan de masse, relié à la masse de la batterie. A ce plan de masse est également reliée une tresse entourant les fils de connexion de la sonde. Ainsi toutes les protections de ce type vis-à-vis des champs électromagnétiques sont reliées à un potentiel fixe.

Les solutions trouvées ci-dessus pour assurer d'une part une alimentation non perturbée et d'autre part une compatibilité électromagnétique s'appliquent à tout type de fonctionnement de l'anémomètre.

Un fonctionnement particulier est le fonctionnement dit « à fil froid ». Il s'agit d'un mode de fonctionnement courant constant, dans lequel le courant avec lequel on alimente le fil est très faible.

On connaît déjà des anémomètres à fil froid.

Dans ces dispositifs connus, l'alimentation comporte une grande résistance R placée en série avec le fil afin de conserver une intensité de courant Iw constante dans ce fil lorsque la vitesse de l'écoulement varie. Le fil est intégré à un pont de Wheatstone pour mesurer avec précision sa résistance $Rw$; le signal de sortie est recueilli au sommet du pont.

L'anémomètre à courant constant possède des avantages. On a le libre choix de la surchauffe, ce qui est très apprécié pour l'étude des fluctuations de température. On peut aussi mesurer le bruit de fond en substituant au fil une résistance fixe et apporter ensuite aux mesures les corrections qui seraient nécessaires. En contrepartie, on amplifie les signaux de sortie de façon importante. La bande passante de ce principe de mesure est imposée par l'inertie thermique du fil.

Dans ce type de fonctionnement, on fait tendre le courant qui alimente le fil vers une valeur nulle afin de chauffer ce dernier le moins possible. Le fil n'est donc plus refroidi par convection (dans la mesure où il n'est pas chauffé), et devient uniquement sensible à la température du milieu environnant $T$ par le biais de la valeur de sa résistance $R_{fil}$ selon la relation :

$$R_{fil} = R_0 \left[1 + a\left(T - T_0\right)\right] \qquad (4)$$

où $R_0$ est la résistance de la sonde à une température de référence et $a$ le coefficient d'évolution de la résistance avec la température.

Dans ce type de fonctionnement, l'écart de température est faible et le courant avec lequel on alimente le fil est très faible. Il sert juste à pouvoir mesurer une tension aux bornes du fil afin de remonter à la valeur de sa résistance. Il est généralement de l'ordre de 50 à 200 μA. Ainsi, le chauffage du fil par effet Joule est négligeable, ce qui vaut à cet anémomètre le nom de thermomètre fil froid.

Un problème posé par ce type de fonctionnement est le suivant : la température mesurée dérive, il est donc nécessaire d'associer la sonde à un thermocouple pour avoir une mesure de la température moyenne.

L'invention propose une solution à ce problème.

Des moyens électroniques associés à un anémomètre courant constant sont représentés en figure 11, sur laquelle le fil est toujours désigné par la référence 2. Le circuit représenté comporte en outre :

- des moyens d'alimentation 110, de préférence une batterie comme expliqué ci-dessus,
- une résistance de référence 112,
- un potentiomètre 114 pour le réglage du courant.

Plus précisément, l'alimentation du circuit Ve, représenté par la pile 110, est fournie par un régulateur de tension (MAX 6325). Les deux résistances 2, 112 sont montées en miroir de courant. Le réglage du courant traversant les deux branches du miroir, chacune des branches comportant l'une de ces deux résistances, est effectué par la tension $Vbe$ d'un transistor de réglage 116, monté en diode, via le potentiomètre 114. La différence de potentiel entre la sonde 2 et la résistance de référence 112 est appliquée à un amplificateur opérationnel d'instrumentation 120. La sotie de l'amplification fournit un signal mesuré qui traduit les variations de la résistance du fil 2.

Afin d'exploiter les informations de faible amplitude, on amplifie le signal aux bornes de la sonde 2. De préférence, et afin de tenir compte des limitations en tension des cartes d'acquisition, cette amplification n'est pas trop importante (on essaie de tenir compte de la résolution en tension de la carte d'acquisition). Or une sonde anémométrique 2 a une résistance importante, et les variations en sortie de l'anémomètre, après amplification, peuvent dépasser les plages d'utilisation des cartes. C'est pourquoi on choisit de centrer sur environ zéro le signal de sortie du thermomètre; ceci permet également de profiter au maximum de la gamme de mesure et de régler ainsi le gain en conséquence. Pour ce faire, on effectue une soustraction entre le signal aux bornes de la 2 sonde et le signal aux bornes d'une résistance de référence 112.

Le montage à miroir de courant permet d'avoir un signal stable traversant la résistance de référence, ainsi qu'un courant stable traversant la sonde 2.

Un tel dispositif a été mis en oeuvre dans le cadre de campagnes d'essais dans une soufflerie, la sonde étant une sonde à un fil fonctionnant en fil froid.

Il a alors été remarqué une dérive des mesures de température moyenne, anormale d'après les conditions de mesure et la sonde 112 de référence, en platine, de l'installation. Il s'est avéré que cette dérive pouvait seulement provenir du circuit électronique. Les composants sont en effet sensibles à la température du milieu environnant, et une différence de température ambiante entre le local d'étalonnage et la soufflerie pouvait tout à fait expliquer les écarts observés.

Dans un premier temps la résistance de référence 112 a été remplacée par une résistance métallique dont le coefficient de variation avec la température est bien moindre (0,6 ppm/°C) et négligeable.

Des relevés des différentes tensions mises en jeu ont été effectués en plaçant le circuit électronique dans une étuve dont la température est suivie. On peut ainsi vérifier que le régulateur électronique de tension ne voit pas la valeur de la tension qu'il délivre varier avec la température (dérive de 5 $\mu$V.°C$^{-1}$). Les deux tensions aux bornes de la résistance de référence et aux bornes d'une seconde résistance destinée à simuler la sonde ont montré une dérive, parfaitement coordonnée, de l'ordre de 250 $\mu$V.°C$^{-1}$ (pour des résistances de 670 $\Omega$). Ceci indique donc que le courant variait de manière simultanée et identique dans les deux branches du miroir de courant.

On s'est donc intéressé à la valeur de la tension *Vbe* qui fixe ce courant. Un relevé dans les mêmes conditions a indiqué une dérive de cette tension de 2,4 mV.°C$^{-1}$. Cette dérive trouve son origine dans le fait que le transistor 116 concerné par cette tension est monté en diode; or la dérive de tension usuellement observée aux bornes d'une diode est de 2,5 mV.°C$^{-1}$ environ, ce qui concorde parfaitement avec nos relevés.

Pour annuler cette dérive, on maintient les composants du thermomètre (la sonde et ses moyens d'alimentation et de mesure) à une température constante. Par exemple, on régule électroniquement la puissance d'un tapis chauffant placé dans le boîtier de l'anémomètre.

Le circuit électronique du thermomètre est ainsi maintenu à une température supérieure à celle du local dans lequel il se trouve. Cette température à laquelle le circuit est maintenu est régulée à plus ou moins un dixième de degré. Ainsi, non seulement les composants qui constituent l'anémomètre ne dérivent pas, mais ils fonctionnent dans des conditions reproductibles.

Ce dispositif permet, après un unique étalonnage de l'ensemble de la chaîne anémométrique, de mesurer dans l'écoulement non seulement les fluctuations de la température, mais aussi sa valeur moyenne, ce qui est un résultat inédit. En effet, même dans les cas des dispositifs connus pour lesquels un soin particulier est apporté à la métrologie et à la mesure (c'est notamment le cas des mesures de température en sortie d'un jet rapportées par Andreopoulos dans « experimental investigation of jets in a cross flow, Journal of Fluid Mechanics, 1983), les fluctuations de température sont mesurées par un fil froid tandis que la valeur moyenne est donnée par un autre moyen comme une thermistance ou un thermocouple.

Le circuit décrit dans cette partie est applicable à une sonde à plusieurs fils. On peut réaliser autant de circuits que nécessaire.

Un exemple d'étalonnage et d'utilisation va maintenant être donné.

Les étalonnages sont effectués dans une soufflerie. L'air passe successivement dans une boîte chauffante et un échangeur à eau dont la puissance et le débit peuvent être indépendamment réglés afin d'obtenir les niveaux de température souhaités, entre la température ambiante et 150°C environ.

La sonde 2 à fil froid est placée dans la veine d'étalonnage (entourée d'un anneau de garde thermique), au centre de la sortie d'une buse d'injection de l'air. La température de l'enceinte est donnée avec une précision du dixième de degré par une sonde Pt100 de référence associée à un boîtier électronique de mesure (référence : Sfere DGN75T).

Pour chaque point d'étalonnage, un point de fonctionnement de la boîte chauffante et de l'échangeur est choisi. On laisse ensuite l'équilibre thermique s'établir entre l'air et les parois de la soufflerie, opération qui prend plusieurs heures (typiquement 4) . On effectue ensuite un relevé de la tension délivrée par le thermomètre pendant une trentaine de secondes, valeur largement suffisante pour obtenir une convergence de la mesure.

L'opération est répétée cinq fois pour obtenir les coefficients d'étalonnage de la dépendance linéaire de la tension de sortie du thermomètre en fonction de la température du fluide :

$$E = A + B \cdot T \qquad\qquad (5)$$

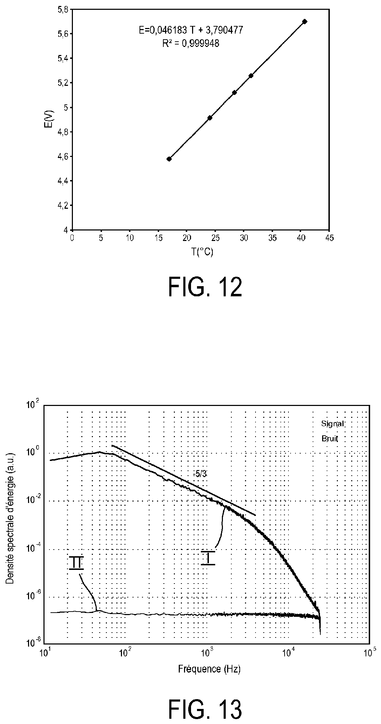

Un exemple typique d'étalonnage est présenté sur la figure 12. On peut y observer que la régression linéaire donne un résultat excellent.

Sur la figure 13 est tracée (courbe I) une densité spectrale d'énergie issue d'une mesure des fluctuations de température sur une soufflerie. Cette mesure a été effectuée à 50 kHz pendant 10 secondes à 3 diamètres hydraulique de jet en aval sur son enveloppe externe (couche de mélange) à l'aide d'une sonde 2 dont le fil 20 a un diamètre de 0,5 $\mu$m. Les conditions d'écoulement étaient les suivantes : *Re* = 55000 et *Rejet* = 60000 (basés sur le diamètre hydraulique des conduits). La différence de température entre les écoulements était de 13°C.

La courbe II représente la densité spectrale d'énergie du signal de tension en sortie du thermomètre avec une résistance branchée à la place de la sonde à fil. Cette densité représente donc le bruit du thermomètre.

Entre les plus grosses échelles captées par le thermomètre et le bruit de ce dernier, on peut observer sur ce tracé une différence de 7 décades, soit un rapport dans ce cas entre grandes et petites échelles discernables de l'ordre de 3000. En d'autres termes, la résolution du thermomètre dans ce cas est d'environ 5.10$^{-3}$ °C.

Une telle résolution et une densité spectrale d'énergie présentant une amplitude aussi importante entre grandes et petites échelles constituent des performances inédites.

Pour des mesures en situation non établie (impact de jet chauffé sur une paroi), la sonde selon l'invention permet de réaliser des mesures sans correction.

En outre, l'invention propose un perfectionnement aux thermomètres, pour les rendre stables pour en augmenter fortement la sensibilité. On dispose ainsi d'un thermo-anémomètre possédant un rapport signal sur bruit avéré de plusieurs milliers (3500 pour le thermomètre et 10000 pour l'anémomètre à tension constante) quand il est associé à une sonde à fils de petit diamètre selon l'invention.

L'invention permet de réaliser un fonctionnement d'un anémomètre à fil froid, sans thermocouple, pour avoir une mesure de la température moyenne. Le circuit de régulation proposé permet de compenser la dérive et de s'affranchir d'un thermocouple.

Le circuit de régulation proposé ici peut être appliqué à une sonde selon l'invention, décrite ci dessus en liaison avec les figures 2A - 10, ou à un autre type de sonde anémométrique.

## Revendications

**1.** Sonde anémométrique à un fil, ou à n fils (n>1) parallèles entre eux, en vue d'une mesure au voisinage d'une paroi, comportant, pour chaque fil :

a) deux broches (4, 6) de maintien du fil, chaque broche ayant un corps ($4_1$) sensiblement cylindrique, ce corps étant aminci et tronqué en extrémité par un plan (43) de positionnement et de fixation du fil, qui coupe une direction (AA') le long de laquelle la broche s'étend sensiblement, formant ainsi une zone plane (43) de positionnement et de fixation du fil ;

b) une portion droite de fil (2), brasé sur lesdites zones (43) planes de positionnement et de fixation du fil.

**2.** Sonde selon la revendication précédente, au moins l'un des fils comportant une âme centrale (20) de diamètre d, par exemple compris entre 0,35 et 0,6 $\mu$m, et une gaine (22), éliminée sur une portion de fil, dite zone sensible, de longueur l pouvant être comprise entre 0,4 mm et 0,5 mm, avec l/d compris entre 600 et 1500.

**3.** Sonde selon l'une des revendications 1 à 2, dans laquelle au moins l'un des fils (2) est brasé sur les broches (4, 6) à l'aide d'une brasure de type étain-plomb.

**4.** Sonde selon l'une des revendications 1 à 3, dans laquelle au moins l'un des fils présente une courbure et/ou les fils étant séparés par une distance comprise entre 0,2 mm et 1 mm, ou comprise entre 0,3 mm et 0,8 mm.

**5.** Sonde selon l'une des revendications 1 à 4, dans laquelle les broches sont fixées sur un corps (10) de sonde muni d'une enveloppe (12) amortisseur des vibrations et/ou écartées d'une distance au moins égale à 4 mm.

**6.** Procédé de réalisation d'une sonde anémométrique à un fil, ou à n fils (n>1) parallèles entre eux, en vue d'une mesure au voisinage d'une paroi, comportant, pour au moins l'un des fils :

a) le positionnement d'une portion droite du fil (2), comportant une âme métallique (20) de diamètre d, entourée d'une gaine (22) de protection, sur deux broches (4, 6), chaque broche ayant un corps ($4_1$) sensiblement cylindrique, ce corps étant aminci et tronqué en extrémité par un plan (43) qui coupe une direction (AA') le long de laquelle la broche s'étend sensiblement, formant ainsi une zone plane (43) de positionnement et de fixation du fil, ;

b) la brasure du fil sur chacune des broches,

c) l'élimination d'une partie de la gaine (22), de manière à mettre en évidence une zone active (14) de mesure du fil de longueur 1.

**7.** Procédé selon la revendication précédente, l'étape b) comportant une mise sous tension mécanique et/ou la formation d'une courbure du fil, par exemple, selon les étapes suivantes :

- réalisation d'une première brasure sur une première broche (4),
- écartement relatif des extrémités des deux broches,
- réalisation de la deuxième première brasure sur la deuxième broche (6),
- relâchement des extrémités des deux broches.

**8.** Procédé selon l'une des revendications 6 à 7, l'étape c) comportant une étape de décapage, ou deux étapes de décapages comportant :

- une première étape de décapage à l'acide,
- une deuxième étape de décapage électrochimique.

9. Procédé selon la revendication 8, comportant une mesure de résistance du fil afin d'en déterminer la longueur décapée.

10. Procédé selon l'une des revendications 8 ou 9, le décapage étant réalisé à l'aide d'une boucle formée par un fil (101) sur laquelle une goutte (102) de liquide de décapage peut être maintenue.

11. Procédé selon l'une des revendications 6 à 10, comportant en outre une étape de recuit à une température sensiblement supérieure à la température à laquelle le fil est destiné à être utilisé.

12. Procédé selon l'une des revendications 6 à 11, la brasure étant réalisée par pistolet à air chaud (81), ou par impact laser.

13. Procédé selon l'une des revendications 6 à 11, comportant une étape préalable de rectification du fil, avant l'étape a).

14. Procédé selon l'une des revendications 6 à 13, au moins l'un des fils ayant un rapport l/d compris entre 600 et 1500, et/ou les fils étant séparés par une distance comprise entre 2,2 mm et 1 mm, ou comprise entre 0,3 mm et 0,8 mm.

15. Procédé de mesure de la vitesse d'un fluide, par exemple au voisinage d'une paroi, mettant en oeuvre une sonde anémométrique selon l'une des revendications 1 à 5.


**Patentansprüche**

1. Anemometersonde mit einem Draht, oder mit n Drähten (n > 1), die zueinander parallel sind, im Hinblick auf eine Messung in der Nähe einer Wand, und zwar für jeden Draht aufweisend:

   a) zwei Stifte (4, 6) zum Halten des Drahtes, wobei jeder Stift einen im Wesentlichen zylindrischen Körper ($4_1$) aufweist, wobei dieser Körper an seinem Ende durch eine Ebene (43) verjüngt und angestutzt ist, die eine Richtung (AA') schneidet, entlang welcher sich der Stift im Wesentlichen erstreckt, wobei auf diese Weise eine ebene Zone (43) zur Positionierung und Befestigung des Drahtes gebildet wird;
   b) einen geradlinigen Drahtabschnitt (2), der an den zur Positionierung und zur Befestigung des Drahtes dienenden ebenen Zonen (43) verlötet ist.

2. Sonde nach dem vorhergehenden Anspruch, wobei mindestens einer der Drähte eine zentrale Seele (20) eines Durchmessers d von beispielsweise 0,35 bis 0,6 $\mu$m und eine Umhüllung (22) aufweist, die an einem Abschnitt des Drahtes entfernt wurde, welcher als sensible Zone bezeichnet wird, und von einer Länge l ist, die zwischen 0,4 mm und 0,5 mm betragen kann, wobei l/d zwischen 600 und 1500 beträgt.

3. Sonde nach einem der Ansprüche 1 bis 2, wobei mindestens einer der Drähte (2) an den Stiften (4, 6) mit Hilfe eines Zinn-Blei-Lotes verlötet ist.

4. Sonde nach einem der Ansprüche 1 bis 3, wobei mindestens einer der Drähte eine Krümmung aufweist und/oder die Drähte durch einen Abstand getrennt sind, der zwischen 0,2 mm und 1 mm betragen kann, oder zwischen 0,3 mm oder 0,8 mm betragen kann.

5. Sonde nach einem der Ansprüche 1 bis 4, wobei die Stifte an einem Sondenkörper (10) befestigt sind, der mit einer schwingungsdämpfenden Umhüllung (12) ausgerüstet ist, und/oder um einen Abstand von mindestens 4 mm entfernt sind.

6. Verfahren zur Fertigung einer Anemometersonde mit einem Draht, oder mit n Drähten (n > 1), die zueinander parallel sind, im Hinblick auf eine Messung in der Nähe einer Wand, und zwar für mindestens einen der Drähte beinhaltend:

   a) Positionieren eines geradlinigen Abschnittes des Drahtes (2), der eine aus Metall bestehende Seele (20) eines Durchmessers d aufweist, die von einer Schutzumhüllung (22) umgeben ist, an zwei Stiften (4, 6), wobei jeder Stift einen im Wesentlichen zylindrischen Körper ($4_1$) aufweist, wobei dieser Körper an seinem Ende durch eine Ebene (43) verjüngt und angestutzt ist, die eine Richtung (AA') schneidet, entlang welcher sich der Stift im Wesentlichen erstreckt, wobei auf diese Weise eine ebene Zone (43) zur Positionierung und Befestigung des Drahtes gebildet wird;
b) Verlöten des Drahtes an jedem der Stifte,
c) Entfernen eines Teils der Umhüllung (22), derart, dass eine aktive Messzone (14) des Drahtes von einer Länge l geschaffen wird.

**7.** Verfahren nach dem vorhergehenden Anspruch, wobei der Schritt b) ein mechanisches Unter-Spannung-Setzen und/oder ein Ausbilden einer Krümmung des Drahtes beinhaltet, beispielsweise mittels der folgenden Schritte:

Erstellen einer ersten Lötverbindung auf einem ersten Stift (4),
die Enden der zwei Stifte werden voneinander entfernt,
Erstellen der zweiten ersten Lötverbindung auf dem zweiten Stift (6),
Nachlassen der Enden der zwei Stifte.

**8.** Verfahren nach einem der Ansprüche 6 bis 7, wobei der Schritt c) einen Beizschritt oder zwei Beizschritte beinhaltet, beinhaltend:

einen ersten Schritt einer Beizung mit Säure,
einen zweiten Schritt einer elektrochemischen Beizung.

**9.** Verfahren nach Anspruch 8, beinhaltend eine Messung eines Widerstands des Drahtes, um bei diesem die gebeizte Länge zu bestimmen.

**10.** Verfahren nach einem der Ansprüche 8 oder 9, wobei das Beizen mithilfe einer aus einem Draht (101) gebildeten Schlinge durchgeführt wird, an der ein Tropfen (102) einer Beizflüssigkeit gehalten werden kann.

**11.** Verfahren nach einem der Ansprüche 6 bis 10, weiter beinhaltend einen Schritt eines Glühens auf einer Temperatur, die im Wesentlichen oberhalb der Temperatur liegt, bei welcher eine Verwendung des Drahts erfolgen soll.

**12.** Verfahren nach einem der Ansprüche 6 bis 11, wobei das Verlöten mittels einer Heißluftpistole (81) oder mittels Laser durchgeführt wird.

**13.** Verfahren nach einem der Ansprüche 6 bis 11, beinhaltend einen vorangehenden Schritt eines Geraderichtens des Drahtes, und zwar vor Schritt a).

**14.** Verfahren nach einem der Ansprüche 6 bis 13, wobei bei mindestens einem der Drähte das Verhältnis l/d zwischen 600 und 1500 beträgt, und/oder die Drähte voneinander um einen Abstand entfernt sind, der zwischen 2,2 mm und 1 mm beträgt, oder zwischen 0,3 mm und 0,8 mm beträgt.

**15.** Verfahren zum Messen der Geschwindigkeit eines Fluids, beispielsweise in der Nähe einer Wand, unter Verwendung einer Anemometersonde nach einem der Ansprüche 1 bis 5.

## Claims

**1.** Anemometer probe having a single wire, or n wires (n>1) that are parallel to each other, for a measurement close to a wall, comprising, for each wire:

a) two pins (4, 6) for holding the wire in place, each pin having a body $(4_1)$ that is substantially cylindrical, said body being made thinner and truncated at the end thereof by a plane (43), which cuts across a direction (AA') along which the pin substantially extends, thus forming a flat zone (43) for positioning and fastening the wire;
b) a straight portion of wire (2) brazed onto said flat zones (43) for positioning and fastening the wire.

**2.** Probe according to the previous claim, wherein at least one of the wires comprises a central core (20) of diameter d, for example in the range 0.35 to 0.6 $\mu$m, and a sheath (22), cut away over a portion of wire, called a sensing zone, of length l, capable of being between 0.4 mm and 0.5 mm, where l/d lies in the range 600 to 1,500.

3. Probe according to either claim 1 or claim 2, wherein at least one of the wires (2) is brazed on the pins (4, 6) using a tin-lead type brazing alloy.

4. Probe according to one of claims 1 to 3, wherein at least one of the wires has a bending and/or the wires are separated by a distance of between 0.2 mm and 1 mm, or between 0.3 mm and 0.8 mm.

5. Probe according to one of claims 1 to 4, wherein the pins are fastened onto a probe body (10) provided with a vibration absorbing casing (12) and/or separated by a distance at least equal to 4 mm.

6. Method of producing an anemometer probe having a single wire, or n wires (n>1) that are parallel to each other, for a measurement close to a wall, comprising, for at least one of the wires:

   a) the positioning of a straight portion of the wire (2), comprising a metal core (20) of diameter d, surrounded by a protective sheath (22), on two pins (4, 6), each pin having a body ($4_1$) that is substantially cylindrical, said body being made thinner and truncated at the end thereof by a plane (43), which cuts across a direction (AA') along which the pin substantially extends, thus forming a flat zone (43) for positioning and fastening the wire;
   b) the brazing of the wire on each of the pins;
   c) the cutting away of one portion of the sheath (22), so as to reveal an active zone (14) for measuring the wire of length l.

7. Method according to the previous claim, wherein step b) comprises the mechanical stressing and/or the formation of a bending of the wire, for example, according to the following steps:

   - performing a first brazing on a first pin (4),
   - distancing the ends of the two pins relative to each other,
   - performing the second first brazing on the second pin (6),
   - releasing the ends of the two pins.

8. Method according to either claim 6 or claim 7, wherein step c) comprises a pickling step, or two pickling steps comprising:

   - a first acid pickling step,
   - a second electrochemical pickling step.

9. Method according to claim 8, comprising a measurement of the strength of the wire in order to determine the pickled length.

10. Method according to one of claims 8 or 9, wherein pickling is performed using a loop formed from a wire (101) on which a drop (102) of pickling solution can be held in place.

11. Method according to one of claims 6 to 10, further comprising an annealing step at a temperature that is substantially greater than the temperature at which the wire is intended to be used.

12. Method according to one of claims 6 to 11, wherein the brazing is performed using a heat gun (81), or by laser impact.

13. Method according to one of claims 6 to 11, comprising a prior wire adjustment step, taking place before step a).

14. Method according to one of claims 6 to 13, wherein at least one of the wires has a l/d ratio of between 600 to 1,500, and/or wherein the wires are separated by a distance of between 2.2 mm and 1 mm, or between 0.3 mm and 0.8 mm.

15. Method for measuring the velocity of a fluid, for example near a wall, implementing an anemometer probe according to one of claims 1 to 5.

FIG. 1

FIG. 2A

FIG. 2B

FIG. 2C

FIG. 2D

FIG. 2E

FIG. 3A

FIG. 3B

FIG. 4

FIG. 5

FIG. 6A

FIG. 6B

FIG. 7

FIG. 8

FIG. 9A

FIG. 9B

FIG. 9C

FIG. 10

FIG. 11

FIG. 12

FIG. 13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **COMTE-BELLOT et al.** On aerodynamic disturbances caused by single hot-wire probes. *ASME, J.Applied Mechanics,* 1971, vol. 38, 767-774

- **ANDREOPOULOS.** experimental investigation of jets in a cross flow. *Journal of Fluid Mechanics,* 1983